# EUROPEAN PATENT APPLICATION

(11) **EP 1 968 203 A2**
(43) Date of publication of application: **10.09.2008**
(21) Application number: 08151887.0
(22) Date of filing: 25.02.2008
(51) Int. Cl.: H04B 1/40

(54) **Multiple mode RF communication system**

(30) Priority: 09.03.2007 US 716203
(71) Applicant: Delphi Technologies, Inc., Troy, Michigan 48007 (US)
(72) Inventor: Dobosz, Paul J., Noblesville, IN 46060-9753 (US); Wills, Archie C., Kokomo, IN 46902 (US); Wills, Elizabeth C., Kokomo, IN 46902 (US)
(74) Representative: Denton, Michael John

(57) **Abstract**

A multiple mode communications transceiver (10) includes an antenna (12) for receiving and transmitting RF energy and a first circuit (16, 18, 20, 24, 26, 30, 54, 60) selectively coupled to the antenna (12) for transmitting and receiving FM modulated signals for terrestrial based communications. The transceiver also includes at least a second circuit (16, 18, 20, 24, 28, 56, 60) selectively coupled to the antenna (12) for transmitting and receiving satellite signals and a control circuit (40) for selecting which of the first and second circuits (16, 18, 20, 24, 26, 28, 30, 54, 56, 60) are employed by the transceiver for the reception and transmission of information.

## Description

### Technical Field

The present invention relates to two-way RF communication systems employing multiple and different modes of transmission and reception.

### Background of the Invention

Utilization of two-way RF communications has become not only increasingly popular but a commercial necessity. Land mobile radio (LMR) in the VHF band from 136 MHz to 174 MHz is widely used in commercial establishments in communicating between base stations and mobile units where it is necessary to communicate with, for example, workers in the field from headquarters. Other two-way RF communication links utilize the VHF band (30 MHz to 300 MHz), including marine VHF radio (MVR) which operate in the frequency range of 156 MHz to 158 MHz. While such VHF communications, which are typically limited to 50 watts transmitted output power or less, provide reliable communications over short distances, there frequently are areas in which coverage gaps exist or the communications are simply out of range. Thus, such terrestrial communication systems, including LMR and MVR communication transceivers, are limited in their ability to provide reliable communications between two locations.

### Summary of the Invention

There exists a need, therefore, for a two-way RF communication system which relies upon the short range capabilities of LMR and MVR communication transceivers and compliments such communication systems by providing supplemental coverage where coverage gaps exist. The system of the present invention provides such an improved communication system by providing a hybrid transceiver which employs a VHF transceiver operating in the VHF frequency range of 136 MHz to 174 MHz and combines with the VHF transceiver a satellite transceiver which is capable of communication with low Earth orbit (LEO) satellites operating at uplink frequencies of 148 MHz to 150 MHz and downlink frequencies of 137 MHz to 138 MHz. The hybrid dual mode communication systems of a preferred embodiment of this invention share common circuit elements due to the proximity of the operating frequency ranges and are, therefore, relatively inexpensive to implement. Also, adding a GPS chip set allows, at a relatively low cost, the ability to provide automatic location of a vehicle, boat, or an otherwise mobile user.

A multiple mode communications transceiver embodying the present invention includes an antenna for receiving and transmitting RF energy and a first circuit selectively coupled to the antenna for transmitting and receiving FM modulated signals for terrestrial based communications. The transceiver also includes at least a second circuit selectively coupled to the antenna for transmitting and receiving satellite signals and a control circuit for selecting which of the first and second circuits are employed by the transceiver for the reception and transmission of information.

An RF communication transceiver embodying a specific embodiment of the present invention includes an antenna for receiving and transmitting RF energy in terrestrial and communication satellite bands, an oscillator for generating predetermined RF frequency signals related to frequencies to be received and transmitted, and an RF converter selectively coupled to the antenna and oscillator for amplifying and converting received signals to a common intermediate frequency. The transceiver also includes first and second demodulators selectively coupled to the converter for detecting signals received from one of terrestrial, base transmitters, and communication satellites, and an audio output circuit coupled to at least one of the demodulators for reproducing audio information from the received signals. The transceiver also includes a source of audio signals; first and second modulators with at least one modulator selectively coupled to the oscillator and to the audio signal source for generating modulated RF signals for communication in one of the terrestrial and communication satellite frequencies; and an amplifier coupled to the first and second modulators and to the antenna for transmitting signals from the transceiver.

With such a system, reliable communications can be established through either the terrestrial VHF communication link or, if a gap in such communications exist, the operator can either manually select satellite communication transmission through a subscription service. The transceiver, through its microprocessor based control circuit, can test to see which of the communication links have the best signal strength and automatically use that mode of transmission.

These and other features, advantages and objects of the present invention will be further understood and appreciated by those skilled in the art by reference to the following specification, claims and appended drawing.

### Brief Description of the Drawing

The present invention will now be described, by way of example, with reference to the accompanying drawing, in which:

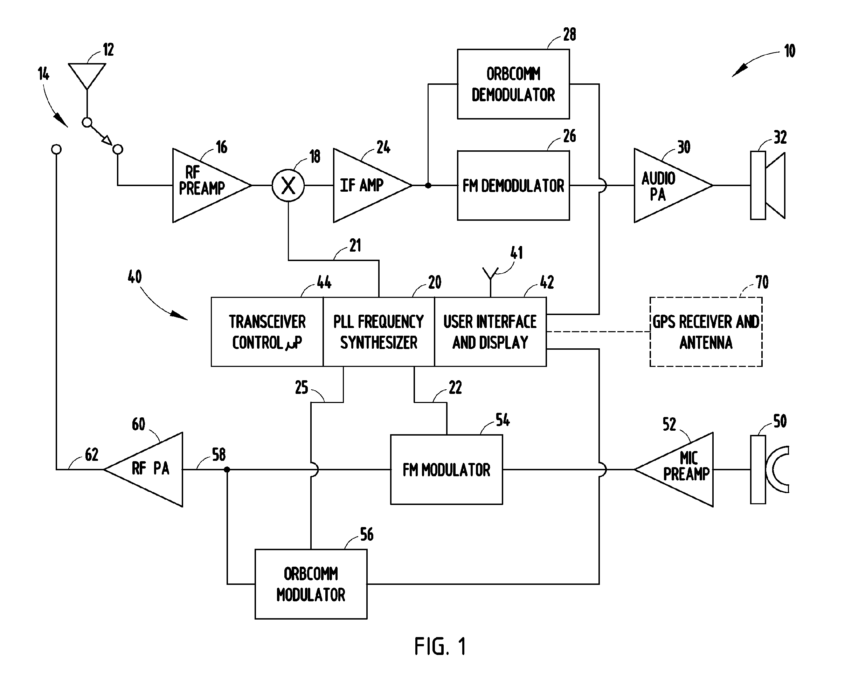

FIG. 1 is a block electrical circuit diagram of an RF transceiver embodying the present invention.

### Description of the Preferred Embodiment

Fig. 1 shows a transceiver 10 embodying the present invention and which includes an antenna 12 for the reception and transmission of VHF (30 - 300 MHz) frequency energy for terrestrial and satellite communications. In a preferred embodiment, the transceiver covers frequencies falling within the LMR frequency band of from 136 to 174 MHz range, the MVR frequency band of from 156 to 158 MHz, and the current communications satellite frequency range of from 137 to 150 MHz. These frequencies, of course, may change with changes in FCC regulations, and the invention is not limited to existing specific frequencies. The antenna 12 is coupled to a solid state transmit/receive switch 14 which typically is actuated by a user actuated push-to-talk (PTT) button switch on a handheld microphone or on a portable unit. Such a button switch is part of the user interface circuit 42. When in a reception mode, antenna 12 is coupled to an RF preamplifier 16 which amplifies received signals and applies them to a mixer 18 coupled to an oscillator 20, which is a phase locked loop frequency synthesiser having an output 21 coupled to mixer 18 and a second output 22 coupled to an FM modulator 54, as described below.

Mixer 18 converts the received signals depending upon the oscillator output 20 to a fixed intermediate frequency signal regardless of the incoming frequency and applies this signal to an intermediate frequency amplifier 24. The output of the intermediate frequency to an FM demodulator 26 for the demodulation of terrestrial based signals and to a satellite communications demodulator 28 for demodulation of satellite signals when signals modulated in the communication satellite format are received. Demodulators 26 and 28 may share the same hardware circuit, whose functionality is software defined.

The output from demodulator 26 is applied to an audio amplifier 30 and subsequently to a sound reproduction device, such as a speaker 32, so that the user can receive transmitted audio information, typically speech. Serial data information from demodulator 28 is coupled to the user interface 42 for displaying information received. Thus, the control circuit 40 for the transceiver 10 includes a user interface and display 42 which typically includes an LCD, dot matrix, or other visual display of frequency channels or mode of transmission and other visible user information, as well as a keypad for entering specific information. The user interface and display 42 also will include controls, such as on/off power controls, squelch limit controls, volume controls, a PTT switch, and other conventional control inputs typically found in a VHF or a communication satellite transceiver.

The control circuit 40 for transceiver 10 also includes a microprocessor 44 and interface circuits coupled to the phase locked loop frequency synthesizer 20 an user interface circuit 42 through a suitable buss. The microprocessor applies signals to oscillator 20 for controlling its output frequency depending upon the mode of operation of the transceiver 10 and selected frequency channel. Transceiver 10 also includes a microphone 50 coupled to a microphone preamplifier 52, which is coupled to the FM modulator 54 for the terrestrial transmission mode. A communication satellite modulator 56 is coupled to user interface 42 to receive data when in the satellite communication mode. Modulator 56 receives a satellite band frequency for modulation information from the phased locked loop oscillator 20 output 25. The modulators 54, 56 provide on input line 58 of RF amplifier 60, an FM or communication satellite format digital signal for transmitting by antenna 12 coupled to amplifier 60 by conductor 62 and transmit/receive switch 14. Thus, for satellite frequency communications, an uplink serial data stream in the frequency range of 148 to 150 MHz is provided to the RF amplifier 60. In the case of LMR or MVR, FM modulated signals in the 136 to 174 MHz range or 156 to 158 MHz frequency range, respectively, are provided. Modulators 54 and 56 may share the same hardware circuit, whose functionality is software defined.

The microprocessor 44 employed in the control circuit 40 can be any number of commercially available microprocessors used in existing VHF transceivers which are reprogrammed for this application. The phase locked loop frequency synthesiser or oscillator 20 likewise is a conventional commercially available circuit which is coupled to the microprocessor and controlled by signals therefrom. The signal mode in which the system operates can be controlled manually by the operator through the user interface and display 42 circuit or microprocessor 44 can be programmed to send and receive test signals for determining whether or not a communication link is available and select the strongest signal received from one of the demodulators 26 or 28 and, based upon such signal detection, automatically select which mode of operation the transceiver 10 operates. Interface circuit 42 may include a serial data input port 41 for receiving externally supplied serial data for transmission. Such data could include, as only an example, e-mail from a user's PDA.

The construction of control circuit 40 and several of the RF components of the transceiver 10 can be similar to that disclosed in U.S. Patent Application Serial No. 11/422,121, entitled VEHICLE TELEMATICS SATELLITE DATA TRANSCEIVER UTILIZING FM RADIO CIRCUITRY filed on June 5, 2006, and assigned to the Assignee of the present invention, the disclosure of which is incorporated herein by reference.

The signals received from the LEO satellite are currently received from Orbcomm Inc.'s constellation of thirty communication satellites which operate in the frequency of 148 - 150 MHz for uplink signals and 137 - 138 MHz for downlink signals received by transceiver 10. The modulators and demodulators are formatted for the modulation format of the Orbcomm Inc. communication satellites. One commercially available modulator/demodulator for such an application can be a DS-100 or DS-300 data modem available from Stellar Satellite Communications, Inc. and employed for the demodulator 28 and modulator 56 incorporated into a commercial VHF transceiver, such as an Icom IC-F 1721. The satellite service used is a subscription service for the user of the transceiver.

In some embodiments of the invention, a separate GPS receiver 70, as shown in dotted lines in Fig. 1, is coupled to control circuit 40 through the interface circuit 42. In this embodiment, the GPS receiver 70 includes its own antenna for reception of global positioning signals such as GPS, Gallileo, or other global positioning signals emanating from satellites is capable of determining an accurate geographic position of the transceiver and furnishing that information via Satellite or terrestrial communications links through the transceiver. The GPS chipset may be added as circuit 70 to provide GPS location data for locating the position of the mobile user in case of an emergency or to track the location of the mobile user in the normal course of business.

Thus, with the transceiver of the present invention, reliable, multi-mode communications are available and, in the particular preferred embodiment described, operates either with terrestrial VHF frequency signals or communication satellite frequency signals to provide alternate modes of communication depending upon the reliability of one of both of the available modes. In one marine application, a man-overboard signal can be generated by circuit 42 including GPS location information from receiver 70 and transmitted via modulator 56 and amplifier.

It will be understood by those who practice the invention and those skilled in the art, that various modifications and improvements may be made to the invention without departing from the spirit of the disclosed concept. The scope of protection afforded is to be determined by the claims and by the breadth of interpretation allowed by law.

## Claims

1. A multiple mode communications transceiver comprising:
an antenna (12) for receiving and transmitting RF energy;
a first circuit (16, 18, 20, 24, 26, 30, 54, 60) selectively coupled to said antenna (12) for transmitting and receiving FM modulated signals for terrestrial based communications;
a second circuit (16, 18, 20, 24, 28, 56, 60) selectively coupled to said antenna (12) for transmitting and receiving satellite signals; and
a control circuit (40) for selecting which of said first and second VHF circuits are employed by said transceiver.

2. The transceiver as defined in claim 1 wherein said first and second circuits (16, 18, 20, 24, 26, 28, 30, 54, 56, 60) are VHF frequency circuits which share common circuit elements (16, 18, 20, 24, 60).

3. The transceiver as defined in claim 2 wherein said common circuit elements (16, 18, 20, 24, 60) include an RF preamplifier (16).

4. The transceiver as defined in claim 3 wherein said common circuit elements (16, 18, 20, 24, 60) include an RF power amplifier (60).

5. The transceiver as defined in claim 4 wherein said common circuit elements (16, 18, 20, 24, 60) include an RF oscillator (20).

6. The transceiver as defined in claim 5 wherein said control circuit (40) includes a microprocessor (44) and a user interface circuit (42).

7. The transceiver as defined in claim 1 and further including a GPS receiver (70) coupled to said second circuit (16, 18, 20, 24, 28, 56, 60) for transmitting information identifying the location of said transceiver.

8. The transceiver as defined in claim 1 wherein said control circuit (40) includes a user interface and display (42).

9. The transceiver as defined in claim 8 wherein said control circuit (40) includes a microprocessor (44).

10. A multiple mode communications transceiver comprising:
an antenna (12) for receiving and transmitting RF energy;
an oscillator (20) for generating predetermined RF frequency signals related in frequency to signals to be received and transmitted;
an RF converter (18) selectively coupled to said antenna (12) and to said oscillator (20) for amplifying and converting received signals to a common intermediate frequency;
a first demodulator (26) coupled to said converter (18) for detecting signals received from terrestrial based transmitters;
a second demodulator (28) coupled to said converter (18) for detecting signals received from communication satellites;
an audio output circuit (30, 32) coupled to at least one of said demodulators (26, 28) for reproducing audio information contained in received signals;
a source of audio signals (50, 52) to be transmitted;
a first modulator (54) selectively coupled to said oscillator (20) and to said source (50, 52) for generating modulated RF signals for communication with terrestrial based receivers;
a second modulator (56) selectively coupled to said oscillator (20) for providing signals for transmitting to communication satellites; and
an RF amplifier (60) selectively coupled to said first and second modulators (54, 56) and to said antenna (12) for transmitting signals from said transceiver.

11. The communication transceiver as defined in claim 10 and further including a control circuit (40) coupled to said demodulators (26, 28) and modulators (54, 56) for controlling the modulation employed depending upon the detection of available received signals from one of terrestrial and communication satellite sources.

12. The communication transceiver as defined in claim 11 wherein said control circuit (40) includes a microprocessor (44) and a user interface (42) for selectively controlling the modulation employed.

13. The communication transceiver as defined in claim 12 wherein said transceiver operates in the VHF frequency band.

14. The communication transceiver as defined in claim 13 wherein said transceiver operates in the LMR, MVR, and LEO communication satellite frequency bands.

15. The transceiver as defined in claim 10 and further including a GPS receiver (70) coupled to said second modulator (56) for transmitting information identifying the location of said transceiver.

16. A multiple mode communications transceiver comprising:
an antenna (12) for receiving and transmitting RF energy;
a first RF amplifier (16) selectively coupled to said antenna (12) for amplifying received signals;
a second RF amplifier (60) selectively coupled to said antenna (12) for transmitting signals;
a first VHF circuit (16, 18, 20, 24, 26, 30, 54, 60) selectively coupled to said first and second RF amplifiers (16, 60) for transmitting and receiving FM modulated signals for terrestrial based communications;
a second VHF circuit (16, 18, 20, 24, 28, 56, 60) selectively coupled to said first and second RF amplifiers (16, 60) for transmitting and receiving satellite signals; and
a control circuit (40) for selecting which of said first and second VHF circuits (16, 18, 20, 24, 26, 28, 30, 54, 56, 60) are employed by said transceiver.

17. The transceiver as defined in claim 16 wherein said first and second circuits (16, 18, 20, 24, 26, 28, 30, 54, 56, 60) are VHF frequency circuits which share common circuit elements (16, 18, 20, 24, 60).

18. The transceiver as defined in claim 17 wherein said common circuit elements (16, 18, 20, 24, 60) include an RF preamplifier (16).

19. The transceiver as defined in claim 18 wherein said common circuit elements (16, 18, 20, 24, 60) include an RF oscillator (20).

20. The transceiver as defined in claim 16 and further including a GPS receiver (70) coupled to said second circuit (16, 18, 20, 24, 28, 56, 60) for transmitting information identifying the location of said transceiver.
